# EUROPEAN PATENT APPLICATION

(11) **EP 2 508 989 A2**
(43) Date of publication of application: **10.10.2012**
(21) Application number: 12002546.5
(22) Date of filing: 10.04.2012
(51) Int. Cl.: G06F 9/445

(54) **Software component information retrieving method for SCOMO and related service system**

(30) Priority: 07.04.2011 US 201113472641
(71) Applicant: HTC Corporation, Taoyuan County 330 (TW)
(72) Inventor: Yu, Chun-Ta, Taoyuan City Taoyuan County 330 (TW)
(74) Representative: Schmidbauer, Andreas Konrad

(57) **Abstract**

A software component information retrieving method for a SCOMO server in a service system is disclosed. The software component information retrieving method comprises receiving a message from a SCOMO client, wherein the message includes an alter type and the alert type is used for checking an available software component in the SCOMO server; and creating a sub-tree of the SCOMO tree in the SCOMO client when an available software component is found, wherein the sub-tree corresponds to the available software component and comprises information of the available software component.

## Description

### Cross Reference To Related Applications

This application claims the benefit of U.S. Provisional Application No. 61/472,641, filed on April. 07, 2011 and entitled "Retrieving Available Software Components Mechanism for Software Component Management Object", the contents of which are incorporated herein in their entirety.

### Background of the Invention

### 1. Field of the Invention

The present invention relates to a method used in a service system, and more particularly, to a software component retrieving Method for SCOMO in the service system.

### 2. Description of the Prior Art

Open Mobile Alliance (OMA) is founded to develop OMA specifications for mobile services to meet users' needs. Furthermore, the OMA specifications aim to provide the mobile services which are interoperable across geographic areas (e.g. countries), operators, service providers, networks, operation systems and mobile devices. In detail, the mobile services conforming to the OMA specifications can be used by the users without restriction to particular operators and service providers. The mobile services conforming to the OMA specifications are also bearer agnostic, i.e., the bearer that carries the mobile services can be a second generation (2G) mobile system such as GSM, EDGE or GPRS, or a third generation (3G) and beyond mobile system such as UMTS, LTE or LTE-Advanced. Further, the mobile services can be executed on an operation system such as Windows, Android or Linux operated on various mobile devices. Therefore, industries providing devices or the mobile services supporting the OMA specifications can benefit from a largely growing market enabled by interoperability of the mobile services. Besides, the users use the devices or the mobile services supporting the OMA specifications can also have a better experience due to the interoperability of the mobile services.

A device management (DM) protocol conforming to the OMA specifications is designed for management of mobile devices such as mobile phones, PDAs and palm top computers. The device management is intended to support the following typical uses: configuration of device for allowing changes to settings and parameters of the device, software upgrades for providing new software (e.g. applications and system software) and/or bug fixes to be loaded on the device, and fault management for reporting errors from the device, and/or querying about status of the device.

Management objects are the entities that can be manipulated by management actions carried over the OMA DM protocol. A Management Object can be as small as an integer or large and complex like a background picture, screen saver, or security certificate. The OMA DM protocol is neutral about the contents, or values, of the Management Objects and treats the node values as opaque data.

In OMA DM working group, SCOMO (Software Component Management Object) was proposed to enable remote software component management within a device. This can be used for example to update antivirus software or browser plug-in etc. Management operations defined by SCOMO for the purpose of software component management on the device support delivery, download, installation, update, removal, activation and de-activation. The SCOMO is meant to manage any other type of software asset than firmware. Examples of software components are applications, executables, libraries, UI-elements, certificates, licenses etc. In addition, retrieval of inventory of software components on the device is also supported. The inventory includes software components delivered via SCOMO and can also include those that are installed outside of SCOMO e.g. at the factory or by the end user.

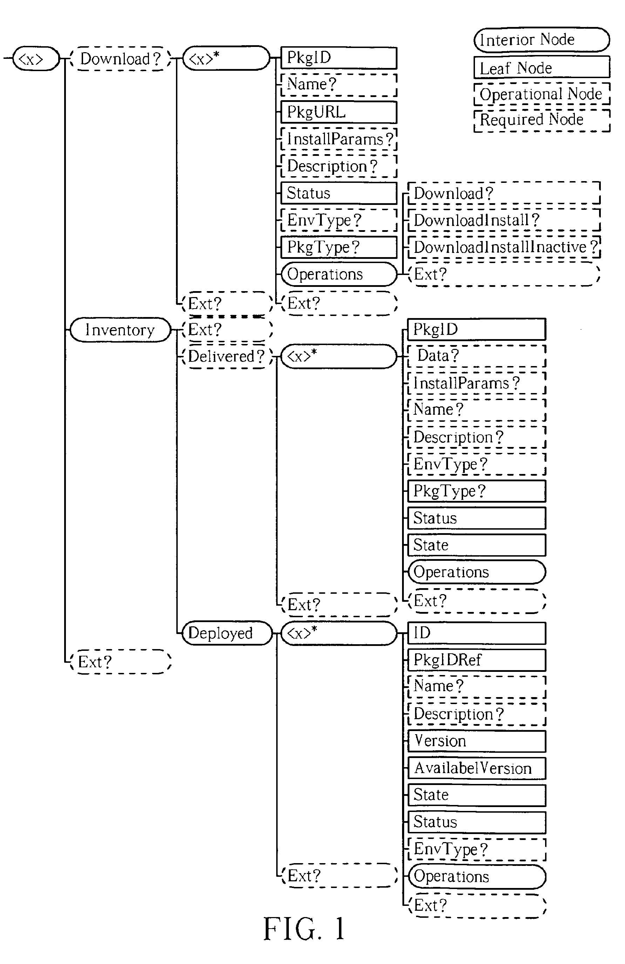

Please refer to FIG. 1, which is a schematic diagram of a SCOMO tree in the prior art. A Management Object associated with Software Component management are assembled under an unnamed interior node x, dynamically or statically created. The SCOMO tree has a well-defined structure, with designated Ext nodes to allow non-standard extension nodes. The general structure of the SCOMO tree is as follows:
1. Download: A sub-tree containing pre-delivery information and actions that are used for triggering the delivery and installation of Delivery Packages using indirect delivery mechanism.
2. Inventory: A sub-tree containing post-delivery information and actions.
2.1. Inventory/Delivered: A sub-tree containing post-delivery (but pre-installation) information of Delivery Packages. This sub-tree is created either by the Device after using indirect delivery mechanism or by the server before using direct delivery mechanism. This sub-tree contains actions for installation and removal. 2.2. Inventory/Deployed : A sub-tree containing post-installation information of Deployment Components, as well as actions for activation, deactivation and removal.

In current design of SCOMO, if a SCOMO server wants to download a software component to a SCOMO client, the SCOMO server creates a "Download" sub-tree which has the information of the software component includes download URI, package type and other information in a SCOMO client. The SCOMO server triggers the Exec command to the SCOMO client to download this software component. However, the SCOMO client can not discovery how many software components are available in the SCOMO server. Some of these software components may not be downloaded yet.

### Summary of the Invention

The disclosure therefore provides software component retrieving method for a software component management object (SCOMO) in a service system.

A software component information retrieving method for a SCOMO client in a service system is disclosed. The software component information retrieving method comprising sending a message including an alert type to a SCOMO server, wherein the alert type is used for checking an available software component in the SCOMO server.

A software component information retrieving method for a SCOMO server in a service system is disclosed. The software component information retrieving method comprises receiving a message from a SCOMO client, wherein the message includes an alter type and the alert type is used for checking an available software component in the SCOMO server; and creating a sub-tree of the SCOMO tree in the SCOMO client when an available software component is found, wherein the sub-tree corresponds to the available software component and comprises information of the available software component.

A software component retrieving method for a SCOMO client in a service system is disclosed. The software component retrieving method comprises sending a message including an alert type to a SCOMO server when the SCOMO client intends to download a specific software component, wherein the alert type is used for requesting the specific software component.

A software component retrieving method for a SCOMO server in a service system is disclosed. The software component retrieving method comprises receiving a message from a SCOMO client, wherein the message includes an alter type and the alert type is used for requesting a specific software component; and creating a sub-tree of the SCOMO tree in the SCOMO client according to reception of the message to prepare to download requesting specific software component in the SCOMO client, wherein the sub-tree corresponds to the specific software component and comprises information of the specific software; sending a second message to a SCOMO client to start the software component download process defined in the SCOMO specificationrun operation under the sub-tree when the Download sub-tree is created successfully.

A service system comprises a SCOMO client for sending a first message including a first alert type, wherein the first alert type is used for checking an available software component in the SCOMO server; and a SCOMO server for receiving the first message from the SCOMO client and creates a sub-tree of the SCOMO in the SCOMO client, wherein the sub-tree corresponds to the available software component and comprises information of the available software component.

A service system comprises a SCOMO client and a SCOMO server. The SCOMO client is used for sending a first message including a first alert type when the SCOMO client intends to download a specific software component, wherein the first alert type is used for requesting a specific software component. The SCOMO server is used for receiving the first message from the SCOMO client.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a schematic diagram of a SCOMO tree in the prior art.

FIG.2 is a schematic diagram of an exemplary service system.

FIG.3 is a schematic diagram of an exemplary communication device.

FIGs. 4-6 are flowchart of an exemplary process.

### Detailed Description

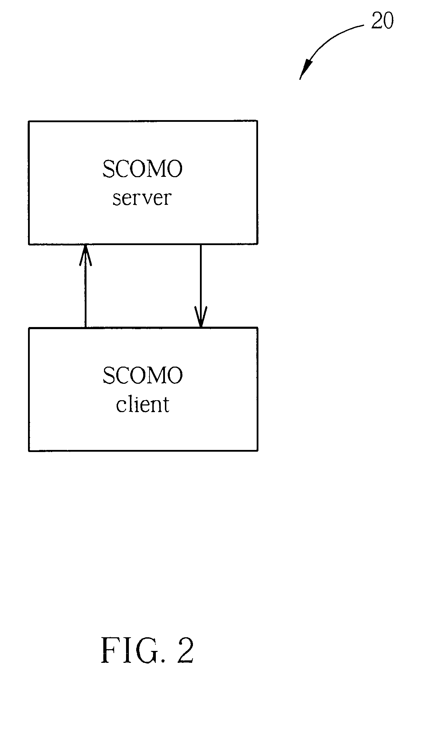

Please refer to FIG. 2, which is a schematic diagram of a service system 20 according to an example of the present disclosure. The service system 20 complies with an Open Mobile Alliance (OMA) Device Management (DM) protocol and is briefly composed of a Software Component Management Object (SCOMO) server, and a SCOMO client. The SCOMO server is a logical entity which is dedicated to issue SCOMO operations to a device or consume the SCOMO alerts from the device. The SCOMO client is responsible for executing the SCOMO operations. It consumes the software component delivered to the device and is expected to relay SCOMO alerts conveying a success or failure result back to the SCOMO server.

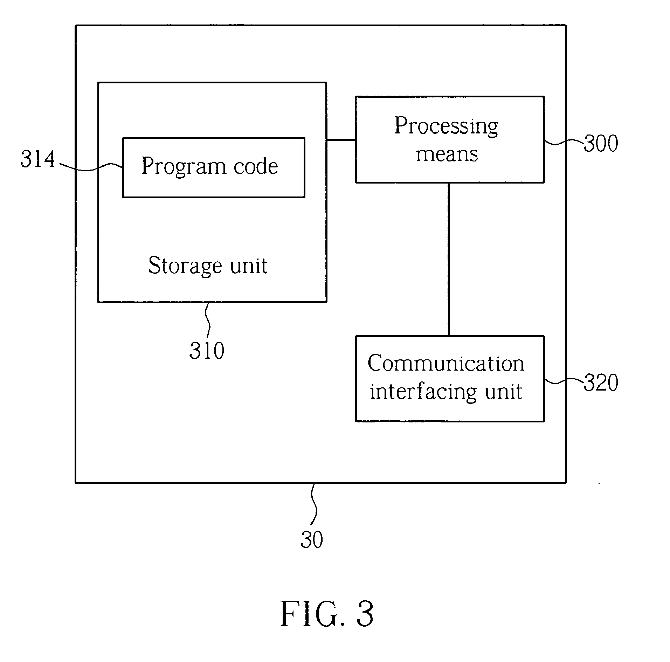

Please refer to FIG.3, which is a schematic diagram of a communication device 30 according to an example of the present disclosure. The communication device 30 can be the SCOMO server or the SCOMO client shown in FIG.2, but is not limited herein. The communication device 30 may include a processor 300 such as a microprocessor or Application Specific Integrated Circuit (ASIC), a storage unit 310 and a communication interfacing unit 320. The storage unit 310 may be any data storage device that can store a program code 314, accessed by the processor 300. Examples of the storage unit 310 include but are not limited to a subscriber identity module (SIM), read-only memory (ROM), flash memory, random-access memory (RAM), CD-ROM/DVD-ROM, magnetic tape, hard disk, and optical data storage device. The communication interfacing unit 320 is preferably a transceiver and can exchange signals with the server according to processing results of the processor 300.

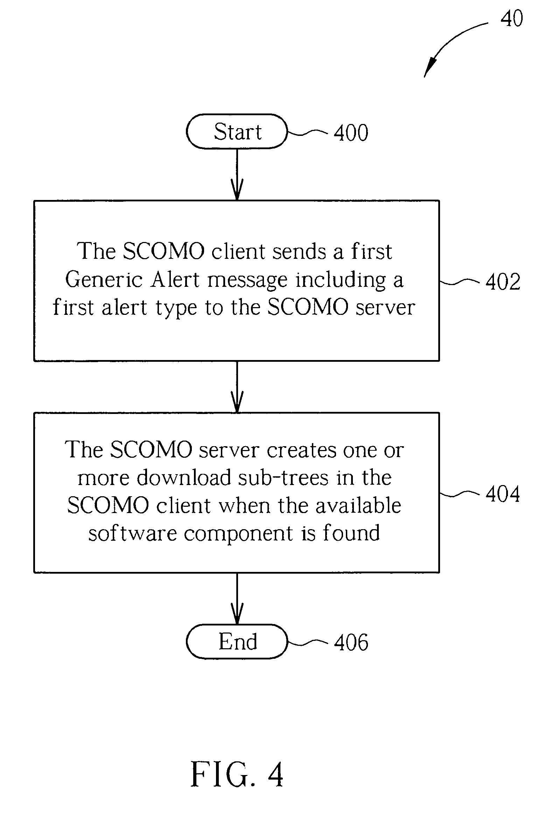

Please refer to FIG.4, which is a flowchart of a process 40 according to an example of the present disclosure. The process 40 is used in the service system 20 for the SCOMO client to retrieve available software components in the SCOMO server. The process 40 may be compiled into the program code 314 and includes the following steps:

Step 400: Start.

Step 402: The SCOMO client sends a first Generic Alert message including a first alert type to the SCOMO server.

Step 404: The SCOMO server creates one or more download sub-trees in the SCOMO client when the available software component is found.

Step 406: End.

According to the process 40, the SCOMO client sends the first Generic Alert message to the SCOMO server to automatically inquire the SCOMO server if there are any available software components in the SCOMO server which have not been downloaded by the SCOMO client yet. The first Generic Alert message includes the first alert type which indicates the first Generic Alert message is used for checking the available software components in the SCOMO server. Examples of software components are applications, executables, libraries, UI-elements, certificates, licenses etc. The SCOMO server receives the first Generic Alert message including the first alert type and creates the download sub-trees in the SCOMO client by sending a first DM (Device Management) message to the SCOMO client if there are any available software components in the SCOMO server which have not been downloaded by the SCOMO client yet. The download sub-trees are sub-trees under a "Download" node of the SCOMO tree. Each download sub-tree corresponds to one software component. Thus, the SCOMO client can find out how many software components are available in the SCOMO server

If the SCOMO client intends to download a certain software component after the download sub-tree is built, the SCOMO client sends a second Generic Alert message to the SCOMO server. The second Generic Alert message includes a second alert type which indicate the second Generic Alert message that is used for requesting the a specific software component. The SCOMO server receives the second Generic Alert message with the second alert type and sends a second DM message to the SCOMO client to start the software component download process defined in the SCOMO specification.

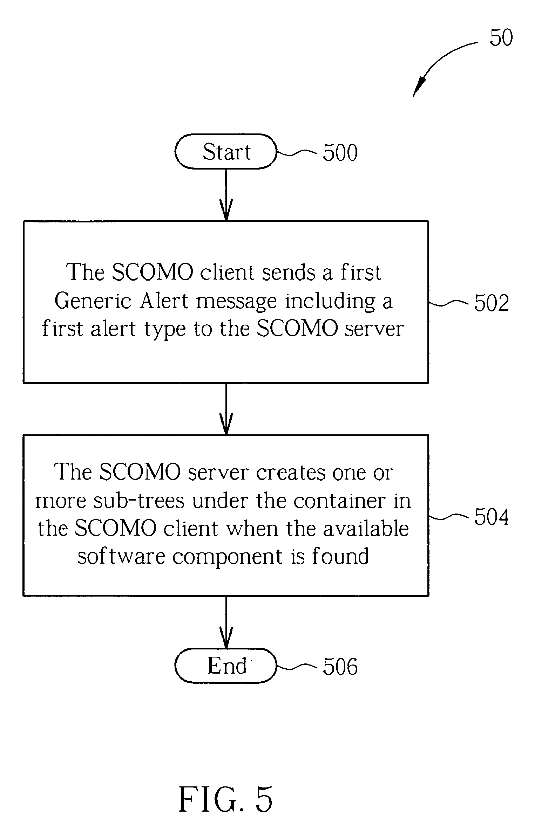

In some examples, there is a container in the SCOMO tree of the SCOMO client. The container is a group of sub-trees in the SCOMO tree to store the available software component information, where the sub-tree may only contain a single node. Please refer to FIG. 5, which is a flowchart of a process 50 according to another example of the present disclosure. The process 50 is used in the service system 20 for the SCOMO client to retrieve available software components in the SCOMO server. The process 50 may be compiled into the program code 314 and includes the following steps:

Step 500: Start.

Step 502: The SCOMO client sends a first Generic Alert message including a first alert type to the SCOMO server.

Step 504: The SCOMO server creates one or more sub-trees under the container in the SCOMO client when the available software component is found

Step 506: End.

According to the process 50, the SCOMO client sends the first Generic Alert message to the SCOMO server to automatically inquire the SCOMO server if there are any available software components in the SCOMO server which have not been downloaded by the SCOMO client yet. The first Generic Alert message includes the first alert type which indicate the first Generic Alert message that is used for checking the available software components in the SCOMO server. Examples of software components are applications, executables, libraries, UI-elements, certificates, licenses etc. Unlike the process 40, the SCOMO server receives the first Generic Alert message including the first alert type and sends the first DM message to create the sub-trees under the container in the SCOMO client. The container is a group of t sub-trees of the SCOMO tree to store the available component information, where the sub-tree may only contain a single node. Each sub-tree corresponds to one software component. Thus, the SCOMO client can find out how many software components are available in the SCOMO server.

If the SCOMO client intends to download a specific software component after the sub-tree is built, the SCOMO client sends the second Generic Alert message to the SCOMO server. The second Generic Alert message includes the second alert type which is used for requesting the available software component. The SCOMO server receives the second Generic Alert message with the second alert type and then creates the sub-tree used for the software component download in the SCOMO client. If the sub-tree is created successfully, the SCOMO server transmits the second DM message to the SCOMO client to start the software component download process defined in the SCOMO specification.

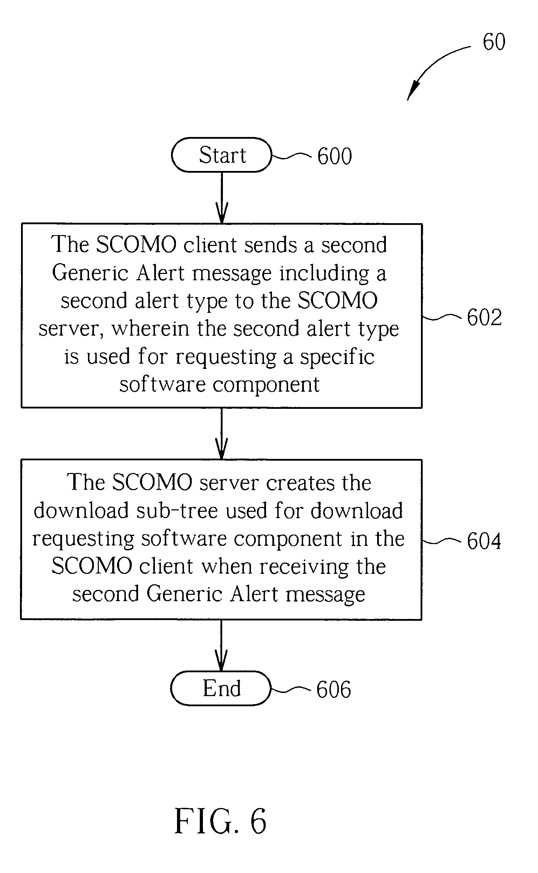

Please refer to FIG.6, which is a flowchart of a process 60 according to an example of the present disclosure. The process 60 is used in the service system 20 for the SCOMO client to download a specific software components in the SCOMO server. The process 60 may be compiled into the program code 314 and includes the following steps:

Step 600: Start.

Step 602: The SCOMO client sends a second Generic Alert message including a second alert type to the SCOMO server, wherein the second alert type is used for requesting a specific software component.

Step 604: The SCOMO server creates the "Download" sub-tree used for download requesting software component in the SCOMO client when receiving the second Generic Alert message.

Step 606: End.

According to the process 60, the SCOMO client transmits the second Generic Alert message which includes the second alert type used for requesting the specific software component to the SCOMO server. The SCOMO server receives second Generic Alert message and then creates the download sub-tree to prepare to download requesting specific software component in the SCOMO client. If the sub-tree is created successfully, the SCOMO server transmits a DM message to the SCOMO client to start the software component download process defined in the SCOMO specification.

Please note that, the abovementioned steps of the processes including suggested steps can be realized by means that could be a hardware, a firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include a system on chip (SOC), system in package (SiP), a computer on module (COM), and the communication device 30.

To sum up, the SCOMO client sends a Generic Alert message to the SCOMO server to inquire the SCOMO server if there are any available software components in the SCOMO server which have not been downloaded by the SCOMO client yet. The Generic Alert message includes the new alert type which is used for checking the available software components in the SCOMO server. When the SCOMO server receives the Generic Alert message including the new alert type, the SCOMO server sends a DM message to the SCOMO client to create the sub-trees in the SCOMO client. The sub-trees can be created under the existing "Download" node or a container. The container is a group of sub-trees, where the sub-tree may be a single node. Each created sub-tree corresponds to one software component. Thus, the SCOMO client can find out how many software components are available in the SCOMO server. In other examples, the SCOMO client transmits a Generic Alert message with an alert type used for requesting a specific software component to the SCOMO server. The SCOMO server receives the Generic Alert message with the alert type used for requesting the specific software component and then creates the "Download" sub-tree to prepare to download requesting specific software component in the SCOMO client. If the sub-tree is created successfully, the SCOMO server transmits a DM message to the SCOMO client to start the software component download process defined in the SCOMO specification.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A software component information retrieving method for a software component management object (SCOMO) client in a service system, the software component retrieving method comprising:
sending a message including an alert type to a SCOMO server, wherein the alert type is used for checking an available software component in the SCOMO server.

2. A software component information retrieving method for a software component management object (SCOMO) server in a service system, the software component retrieving method comprising:
receiving a first message from a SCOMO client, wherein the first message includes an alter type and the alert type is used for checking an available software component in the SCOMO server; and
creating a sub-tree of the SCOMO tree in the SCOMO client when an available software component is found , wherein the sub-tree corresponds to the available software component and comprises information of the available software component.

3. The software component information retrieving method of claim 2, wherein the SCOMO server creating the sub-tree of the SCOMO in the SCOMO client comprise:
the SCOMO server creating the sub-tree of the SCOMO tree in the SCOMO client by sending a second message to the SCOMO client.

4. The software component information retrieving of claim 3, wherein the sub-tree is under a Download node of the SCOMO or under a container of the SCOMO.

5. A software component retrieving method for a software component management object (SCOMO) client in a service system, the software component retrieving method comprising:
sending a message including an alert type to a SCOMO server when the SCOMO client intends to download a specific software component, wherein the alert type is used for requesting the specific software component.

6. A software component retrieving method for a software component management object (SCOMO) server in a service system, the software component retrieving method comprising:
receiving a first message from a SCOMO client, wherein the first message includes an alter type and the alert type is used for requesting a specific software component; and
creating a Download sub-tree of the SCOMO tree in the SCOMO client according to reception of the first message to prepare to download the specific software component in the SCOMO client when the Download sub-tree is not existed, wherein the Download sub-tree corresponds to the specific software component and comprises information of the specific software component.

7. The retrieving software component method of claim 6 further comprising sending a second message to a SCOMO client to start the software component download process defined in a SCOMO specification when the Download sub-tree is created successfully.

8. The retrieving software component method of claim 6, wherein the Download sub-tree is under a Download node of the SCOMO tree.

9. A service system comprising:
a SCOMO client for sending a first message including a first alert type, wherein the first alert type is used for checking an available software component in the SCOMO server; and
a SCOMO server for receiving the first message from the SCOMO client and creates a sub-tree of the SCOMO in the SCOMO client, wherein the sub-tree corresponds to the available software component and comprises information of the available software component.

10. The service system of claim 9, wherein the SCOMO server further sends a second message to create the sub-tree of the SCOMO tree in the SCOMO client when an available software component is found.

11. The service system of claim 10, wherein the sub-tree is under a Download node of the SCOMO or under a container of the SCOMO.

12. The service system of claim 9, wherein the service system complies with an Open Mobile Alliance (OMA) Device Management (DM) protocol.

13. A service system comprising:
a SCOMO client for sending a first message including a first alert type when the SCOMO client intends to download a specific software component, wherein the first alert type is used for requesting a specific software component; and
a SCOMO server for receiving the first message from the SCOMO client.

14. The service system of claim 13, wherein the SCOMO server further creates a Download sub-tree of the SCOMO tree in the SCOMO client according to reception of the first message to prepare to download the specific software component in the SCOMO client when the Download sub-tree is not existed, wherein the Download sub-tree corresponds to the specific software component and comprises information of the specific software component and sends a second message to the SCOMO client to start the software component download process defined in a SCOMO specification when the Download sub-tree is created successfully.

15. The service system of claim 14, wherein the Download sub-tree is under a Download node of the SCOMO tree.
